# EUROPEAN PATENT SPECIFICATION

(11) **EP 3 716 819 B1**
(45) Date of publication and mention of the grant of the patent: **15.05.2024**
(21) Application number: 18884498.9
(22) Date of filing: 28.11.2018
(51) Int. Cl.: A47G 29/122, G07C 9/00, G06Q 50/28, A47G 29/30, A47G 29/14, G06Q 10/08

(54) **SYSTEMS, METHODS, AND APPARATUSES FOR SECURING DELIVERIES**
SYSTEME, VERFAHREN UND VORRICHTUNGEN ZUM FIXIEREN VON ZUSTELLUNGEN
SYSTÈMES, PROCÉDÉS ET APPAREILS PERMETTANT LA SÉCURISATION DE LIVRAISONS

(30) Priority: 28.11.2017 US 201762591340 P
(43) Date of publication of application: 07.10.2020
(73) Proprietor: Boxlock, Inc., Atlanta, Georgia 30306 (US)
(72) Inventor: RUFFKESS, Brad A., Atlanta Georgia 30306 (US); ECHEVARRIA, Hugo Giralt, Oakland California 94608 (US); VANCHINATHAN, Siddharth, Oakland California 94608 (US); MUÑOZ, Alejandro Castillejo, San Francisco California 94110 (US); GLASS, Michael, Atlanta Georgia 30312 (US)
(74) Representative: Sadler, Peter Frederick
(86) International application number: PCT/US2018/062834
(87) International publication number: WO 2019/108643

(56) References cited:
- AU-A4- 2014 100 457
- FR-A1- 3 025 823
- GB-A- 2 483 474
- GB-A- 2 520 698
- US-A1- 2014 188 637
- US-A1- 2016 066 733
- US-A1- 2016 275 450
- US-B2- 6 696 918

## Description

### TECHNICAL FIELD

The present systems, methods, and apparatuses relate generally to securing deliveries and, more particularly, to providing access for delivery drivers and couriers to securely drop off and pick up deliveries.

### BACKGROUND

Over 10 billion packages are delivered each year in the United States, and home deliveries are no longer limited to couriers delivering parcels. Americans are increasingly using home delivery services to pick up and deliver laundry, meal kits, liquor, groceries, etc. Additionally, new ways are constantly developing for retailers to make "last mile" deliveries that extend beyond traditional logistics carriers. As deliveries increase, theft of unattended packages is also increasing. It is estimated that over 23 million Americans are impacted by package theft each year. Therefore, there exists a long-felt but unresolved need for systems, methods, and apparatuses that can quickly and effectively provide protection for deliveries left unattended.

US6696918 relates to a locking mechanism with a plurality of non-permanent access codes that can be uniquely issued to respective delivery services.
US20160275450 describes a method of providing access to a secure receptacle for package delivery via issuance of a one-time key. GB2483474 relates to an apparatus for secure delivery of postal items using a pre-determined signal from a device to unlock a container. GB2520698 describes a method of delivering or collecting goods by sending a remote code for access to a secure apparatus. FR3025823 relates to a device for unlocking an electronic lock based on an authentication digital key. US2016/0066733 describes a system for the receipt of parcels into a lock box based on verification of a parcel tracking number.

### BRIEF SUMMARY OF THE DISCLOSURE

According to various aspects of the present disclosure, and in one embodiment, the present systems, methods, and apparatuses allow couriers (and other individuals needing to secure items being delivered/picked up) to quickly and easily secure deliveries at homes, businesses, or other locations.

Traditionally, couriers delivering packages place the packages outside of a recipient's front door or other access point (e.g., front gate, front steps, etc.), and marks the package as delivered in the courier's delivery system. In these traditional embodiments, the delivered package is left unsecured and unattended, such that theft or other forms of tampering are generally undeterred. Furthermore, in the event a courier has inadvertently matched a package with an incorrect address, the intended recipient is left unaware of his or her package's location, and the actual recipient is burdened with an unknown and unrequested package. According to various aspects of the present disclosure, the present systems and methods establish a secure mechanism for package delivery, as well as provide many benefits over traditional systems.

The invention is defined in the independent claims to which reference should now be directed. Advantageous features are set out in the dependent claims.

In various embodiments, the present systems and methods include a secured container operable to store packages and other items. In various embodiments, a computing device may be operable to communicate with a server (e.g., system server, retailer server, courier server, or other third-party server) to facilitate the same. In one or more embodiments, the computing device may include delivery scanners, tablet computers (e.g., iPads^{®}), smartphones, or any appropriate device (including the locking mechanism itself) capable of connecting to a server (e.g., retailer server, courier server, or other third-party server) and communicating with the locking mechanism.

According to a particular embodiment, the present system includes software for managing the data and interactions between the locking mechanism, computing devices, and third-party servers. In some embodiments, the software may be executed on the computing device to facilitate locking and unlocking the locking mechanism.

### BRIEF DESCRIPTION OF THE DRAWINGS

The accompanying drawings illustrate one or more embodiments and/or aspects of the disclosure and, together with the written description, serve to explain the principles of the disclosure. Wherever possible, the same reference numbers are used throughout the drawings to refer to the same or like elements of an embodiment, and wherein:
FIG. 1 illustrates an exemplary system overview, according to one embodiment of the present disclosure.
FIG. 2 illustrates an exemplary system architecture, according to one embodiment of the present disclosure.
FIG. 3 is a flowchart of an exemplary incoming delivery configuration process, according to one embodiment of the present disclosure.
FIG. 4 is a flowchart of an exemplary lock opening process, according to one embodiment of the present disclosure.
FIG. 5 is a flowchart of an exemplary lock mechanism process, according to one embodiment of the present disclosure.
FIGS. 6A and 6B are screenshots of an exemplary application account information screen, according to one embodiment of the present disclosure.
FIGS. 7A and 7B are screenshots of an exemplary application account information screen, according to one embodiment of the present disclosure.
FIG. 8 is a screenshot of an exemplary application barcode screen, according to one embodiment of the present disclosure.
FIG. 9 is a screenshot of an exemplary application open lock screen, according to one embodiment of the present disclosure.

### DETAILED DESCRIPTION

For the purpose of promoting an understanding of the principles of the present disclosure, reference will now be made to the embodiments illustrated in the drawings and specific language will be used to describe the same. It will, nevertheless, be understood that no limitation of the scope of the disclosure is thereby intended; any alterations and further modifications of the described or illustrated embodiments, and any further applications of the principles of the disclosure as illustrated therein are contemplated as would normally occur to one skilled in the art to which the disclosure relates. All limitations of scope should be determined in accordance with and as expressed in the claims.

Whether a term is capitalized is not considered definitive or limiting of the meaning of a term. As used in this document, a capitalized term shall have the same meaning as an uncapitalized term, unless the context of the usage specifically indicates that a more restrictive meaning for the capitalized term is intended. However, the capitalization or lack thereof within the remainder of this document is not intended to be necessarily limiting unless the context clearly indicates that such limitation is intended.

### Overview

According to various aspects of the present disclosure, and in one embodiment, the present systems, methods, and apparatuses allow couriers (and other individuals needing to secure items being delivered/picked up) to quickly and easily secure deliveries at homes, businesses, or other locations.

Traditionally, couriers delivering packages place the packages outside of a recipient's front door or other access point (e.g., front gate, front steps, etc.), and marks the package as delivered in the courier's delivery system. In these traditional embodiments, the delivered package is left unsecured and unattended, such that theft or other forms of tampering are generally undeterred. Furthermore, in the event a courier has inadvertently matched a package with an incorrect address, the intended recipient is left unaware of his or her package's location, and the actual recipient is burdened with an unknown and unrequested package. According to various aspects of the present disclosure, the present systems and methods establish a secure mechanism for package delivery, as well as provide many benefits over traditional systems.

According to the invention, the present systems and methods include a secured container operable to store packages and other items. In one or more embodiments, the secured container may include a bin for holding packages, and a locking mechanism for securing the bin. In particular embodiments According to the invention , the present systems and methods communicate with the locking mechanism and one or more third party systems for locking and unlocking the locking mechanism to secure a delivery. In various embodiments, a computing device may be operable to communicate with a server (e.g., system server, retailer server, courier server, or other third-party server) to facilitate the same. In one or more embodiments, the computing device may include delivery scanners, tablet computers (e.g., iPads^{®}), smartphones, or any appropriate device (including the locking mechanism itself) capable of connecting to a server (e.g., retailer server, courier server, or other third-party server) and communicating with the locking mechanism.

According to a particular embodiment, the present system includes software for managing the data and interactions between the locking mechanism, computing devices, and third-party servers. In some embodiments, the software may be executed on the computing device to facilitate locking and unlocking the locking mechanism.

Thus, when a delivery is attempted to be secured, the system may determine whether an identifier for the delivery matches those deliveries currently scheduled for delivery to the owner of the account associated with the secured bin. If the delivery matches, then the bin is unlocked so that the delivery may be placed inside the bin and relocked to secure the same.

### Exemplary Embodiments

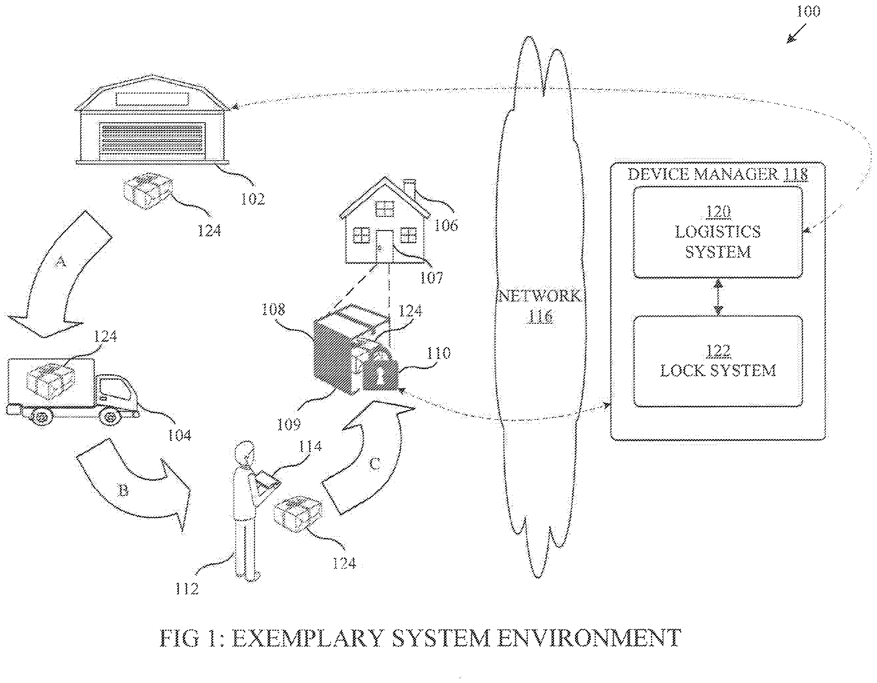

Referring now to the figures, for the purposes of example and explanation of the fundamental processes and components of the disclosed systems, methods, and apparatuses, reference is made to FIG. 1, which illustrates an exemplary, high-level overview 100 of one embodiment of the present disclosure. As will be understood and appreciated, the exemplary, high-level overview 100 shown in FIG. 1 represents merely one approach or embodiment of the present system, and other aspects are used according to various embodiments of the present system. Generally, by way of example, and not by way of limitation, a high-level overview 100 of actions involved in an exemplary secured delivery process is shown in FIG. 1 with the help of a sequence of steps indicated as steps "A" through "C," which are annotated in arrows. In particular, at a high level, FIG. 1 depicts an exemplary scenario in accordance with the present disclosure in which a courier 112 obtains a delivery 124 from a retailer warehouse 102 (at step A) and delivers it to a delivery destination 106 (at step B), securing the delivery 124 at the delivery destination 106 using a secured container 108 (e.g., a bin 109 and a locking mechanism 110) (at step C).

As shown in FIG. 1, a courier 112 approaches a recipient's front door 107 and seeks to deliver a delivery/package 124 (e.g., package, envelope, bag, etc.) to the recipient. In various embodiments, at step A, the package originates at a retailer warehouse 102 or other suitable package origination source (e.g., post office, courier warehouse, grocery store, business, etc.). In certain embodiments, prior to leaving the retailer warehouse 102, the courier scans the package with a delivery scanner 114 or other computing device (e.g., tablet computer, smartphone, etc.), such that the package status is updated in a device manager 118 (e.g., system software) as "Out for Delivery" or other comparable status. In particular embodiments, the device manager may include logistics software 120 and/or lock system software 122 for controlling, managing, and tracking deliveries and locking mechanisms 110. Further, as shown, the various components of this exemplary environment are operatively connected (or in communication) via one or more networks 116.

In one embodiment, the network 116 may be, but is not limited to the Internet, and may involve the usage of one or more services (e.g., a Web-deployed service with client/service architecture, a corporate Local Area Network (LAN) or Wide Area Network (WAN), a cellular data network, or through a cloud-based system). Moreover, as will be understood and appreciated by one having ordinary skill in the art, various networking components like routers, switches, hosts, etc. are typically involved in these communications. Although not shown in FIG. 1, such communications may include, in various embodiments, one or more secure networks, gateways, or firewalls that provide additional security from unwarranted intrusions by unauthorized third parties and cyber-attacks.

Continuing with the example shown in FIG. 1, upon scanning the delivery/package at the retailer warehouse, the package is sent out for delivery 104 with the courier 112 to the package destination 106 (step B). According to the invention, at step C, upon arriving at the front door 107 of the package destination, the courier encounters a secured container 108 for securely storing the package/delivery. In one or more embodiments, the secured container 108 may include a bin 109 for storing the package and a locking mechanism 110 for locking and unlocking the bin 109. In one embodiment, the locking mechanism 110 may be a component separate and distinct from the bin 109. In another embodiment, the locking mechanism 110 may be integrated into the bin 109, such that the locking mechanism 110 and the bin 109 are a single component.

According to the invention, to unlock the locking mechanism and open the bin 109, the courier scans the package with the locking mechanism 110. Prior to unlocking the secured container 108, the device manager 118 contains a record that matches, or otherwise links, the package/delivery to be delivered with the locking mechanism 110 located at the package destination 106. According to the invention, when a courier 112 scans the package with the locking mechanism, the locking mechanism sends the tracking number or other identifier of the package to the device manager 118, such that delivery of the package may be verified and the locking mechanism may be unlocked. The courier, in the current example, may then place the package in the secured container 108 and re-lock it, such that the owner of the secured container may access the package at a later time.

As will be understood from the discussions herein, the above particular example is merely exemplary functionality of the systems and methods described herein. For example, the above describes a courier delivering a package from a retailer warehouse to a particular package destination, but the systems, apparatuses and methods herein may be useful for any use in connection with securing items to prevent tampering by unauthorized parties.

In another alternate embodiment not forming part of the invention, the present disclosure may be used to monitor the status of an inventory of items 124 stored within the secured container 108. Continuing with this example, an employee 112 may scan his/her employee identification badge using locking mechanism 110. If authorized, the employee 112 may open and remove items 124 from the secured container 108. Once the secured container 108 has been closed/locked, the employee 112 may be prompted to scan the items 124 (or barcodes on the same) using the locking mechanism 110 so that the system may track which items 124 have been removed and by which employees 124.

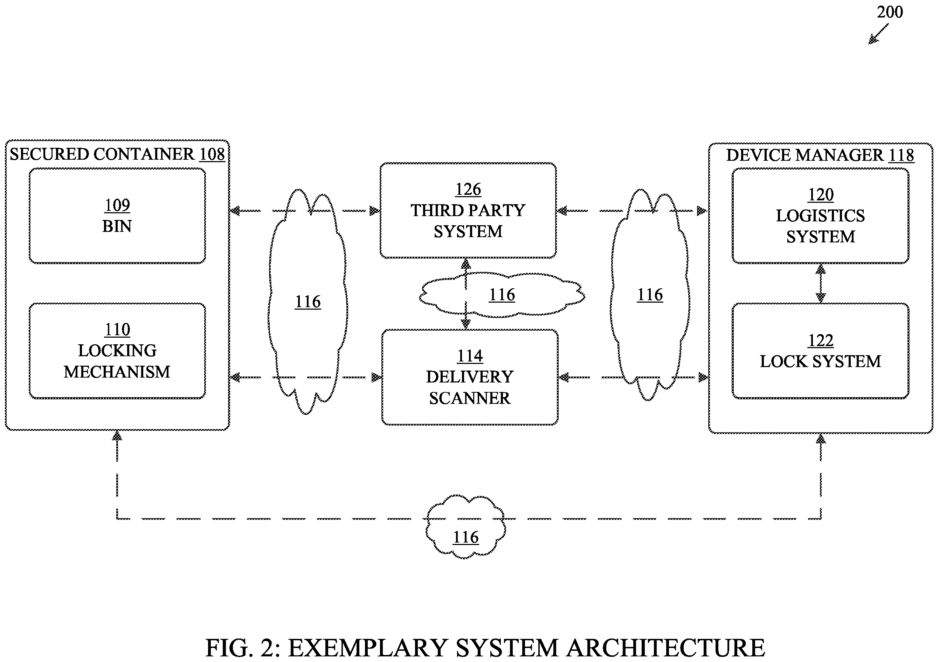

Turning now to FIG. 2, an exemplary system architecture 200 is shown, according to one embodiment of the present disclosure. In various embodiments as discussed above, the system 200 includes a series of components operable to facilitate and manage the secure delivery of packages. In addition to the described components, the system architecture may include one or more modules. For the purposes of this disclosure a module is a software, hardware, or firmware (or combinations thereof) system, process or functionality, or component thereof, that performs or facilitates the processes, features, and/or functions described herein (with or without human interaction or augmentation). A module can include sub-modules. Software components of a module may be stored on a computer readable medium for execution by one or more processors in communication with memory or other storage means. Modules may be integral to one or more servers, or be loaded and executed by one or more servers. One or more modules may be grouped into an engine or an application. Additionally, the system architecture may include any computing device (e.g., desktop computer, laptop, servers, tablets, etc.), combination of computing devices, software, hardware, combination of software and hardware, databases (e.g., stored in the cloud or on premise, structured as relational, etc.), or combination of databases that is capable of performing, or facilitating performance of, the functionality disclosed herein.

According to the invention, and as discussed above, the system includes a secured container 108 for securely storing packages (and other items that may need protection from potential tampering). In particular embodiments, the secured container may comprise a bin 109 for receiving/storing the packages/inventory items and a locking mechanism 110 for locking and unlocking the bin. In one embodiment, the bin may be cube shaped or any other suitable shape (e.g., rectangular, rounded, trapezoidal, etc.). In some embodiments, the bin may be manufactured from wood, steel, resin, or any other suitable material (e.g., carbon fiber, plastic, metal, etc.). In various embodiments, the volume of the bin may be as small as 16,381 (1,000 in) or as large as 655,48 1 (40,000 in³). In certain embodiments, the bin may weigh as little as 4,53 kg (10 pounds), or as much as 90,72 kg (200 pounds). In various embodiments, the bin may comprise hardware for permanently affixing the bin to a larger structure (e.g., house, building, the ground, etc.) or be integrated into the structure itself. In one embodiment, the bin may comprise shelves/compartments for holding multiple items.

In particular embodiments, the locking mechanism 110 may be manufactured from zinc, steel, plastic, or any other suitable material. According to the invention, In the locking mechanism comprises a barcode scanner power source (e.g., battery, plug for wall outlet, wiring to connect to power supply, etc.), and/or wireless networking capabilities (e.g. WiFi, Bluetooth, zigbee, etc.). In one or more embodiments, the locking mechanism may be in operable communication with a device manager 118 to conduct the processes disclosed herein. In certain embodiments, the locking mechanism may be a separate component, or it may be fully integrated with the bin, such that the secured container 108 is a single component.

Continuing with FIG. 2, in various embodiments, the system includes a device manager 118 for managing and controlling locking mechanisms 110 and facilitating package/delivery tracking. Generally, the device manager 118 may comprise any computing device (e.g., desktop computer, laptop, servers, tablets, etc.), combination of computing devices, software, hardware, combination of software and hardware, database (e.g., stored in the cloud or on premise, structured as relational, etc.), or combination of databases that is capable of providing the functionality disclosed herein. In some embodiments, the device manager may comprise logistics or other third-party (e.g., retailer, courier, post office, etc.) software 120 and/or lock system software 122. Generally, the logistics software 120 may facilitate the tracking of deliveries. In particular embodiments, the logistics software and/or the lock system software may include databases for storing tracking numbers, user account information, or other delivery-related data. In one or more embodiments, user account information may include, but is not limited to: name, address, date of birth, lock identifier, and any other suitable information. In various embodiments, the lock system software 122 may be operable to communicate with the logistics software 120 and/or the locking mechanism 110 to facilitate locking/unlocking of the locking mechanism 110.

In particular embodiments, the system also includes a delivery scanner 114 that a courier 112 uses to manage package delivery. In certain embodiments, the delivery scanner may be a handheld device (e.g., smartphone, tablet computer, etc.) or other suitable device (e.g., a wearable device). In various embodiments, the delivery scanner may include wireless networking capabilities (e.g. WiFi, Bluetooth, zigbee, etc.). In one or more embodiments, the delivery scanner 114 is in operable communication with the locking mechanism 110 and the device manager 118 to ensure, among other things, that at least package delivery status is up-to-date.

In various embodiments, the system further comprises the third party system 126 that may be any computing device (e.g., desktop computer, laptop, servers, tablets, etc.), combination of computing devices, software, hardware, combination of software and hardware, database (e.g., stored in the cloud or on premise, structured as relational, etc.), or combination of databases that is capable of performing the functionality disclosed herein. In one embodiment, the third party system 126 may be operated by couriers or other logistics provider to track the status of deliveries. In one embodiment, the third party system 126 may permit writing to/from and checking the blockchain. In one embodiment, the third party system 126 is integrated into the logistics system 120.

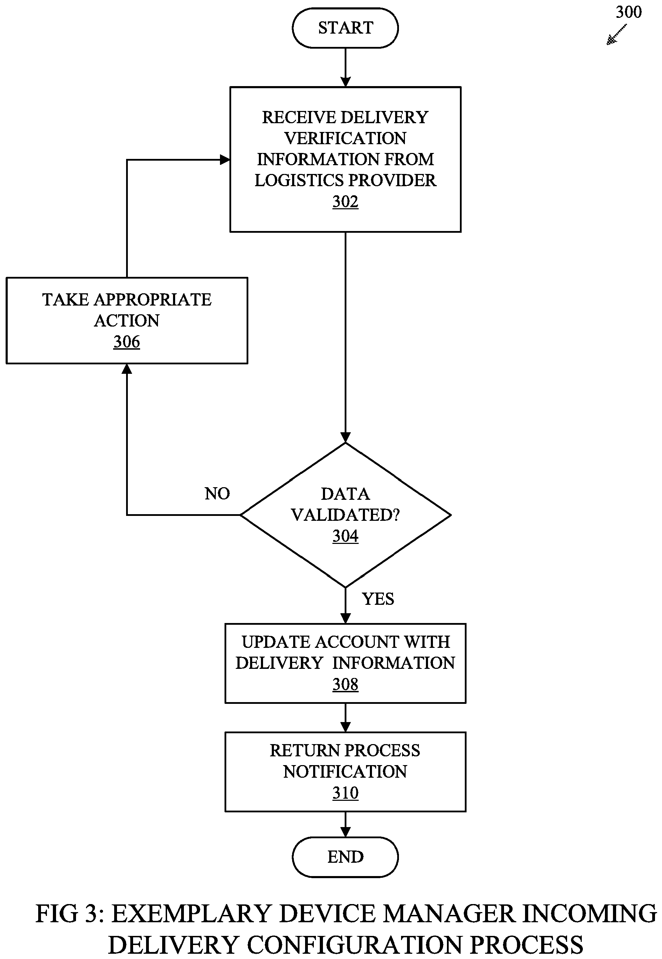

Now referring to FIG. 3, an exemplary flowchart of an incoming delivery configuration process 300 is shown, according to one embodiment of the present disclosure. Generally, process 300 is the process by which the system (e.g., device manager 118) configures a system account for receipt of a delivery. A secured container, in various embodiments, may be linked to a system account owned and/or managed by the owner and/or manager of the secured container. Similarly, the system account may be linked to an account with the delivery company/logistics provider that is owned and/or managed by the owner and/or manager of the secured container. In particular embodiments, the account associated with a secured container may be configured with the tracking number of the expected package, such that the courier may open the lock by scanning the package and/or locking mechanism, and ensuring that the tracking number of the package matches the tracking number configured in the associated account. As will be understood by one having ordinary skill in the art, the steps and processes shown in FIG. 3 (and those of all other flowcharts and sequence diagrams shown and described herein) may operate concurrently and continuously, are generally asynchronous and independent, and are not necessarily performed in the order shown.

In one embodiment, and as shown in FIG. 3, the exemplary process 300 begins at step 302, where the system is configured to receive delivery verification information from a logistics provider (e.g., an email address, a delivery tracking number, an encrypted email address and delivery tracking number, a block on a blockchain, etc.) or inventory identification information (e.g., employee identifiers, item identifiers, item quantities, etc.). In particular embodiments, the data received at step 302 may have been encrypted by hashing or by any other suitable method of encryption (e.g., Rivest-Shamir-Adleman (RSA), Advanced Encryption Standard (AES), Data Encryption Standard (DES), Triple Data Encryption Standard (3DES), Twofish, Blowfish, etc.). In various embodiments, the system may receive the delivery verification information from the logistics provider/third party system via any suitable wireless communication protocol (e.g., TCP, TLS, HTTP, HTTPS, UDP, FTP, etc.). In one or more embodiments, the logistics provider's server may be virtual, i.e., cloud-based, or physical.

At step 304, in various embodiments, the system verifies/validates the delivery verification information (e.g., checks to see if the email address sent by the logistics provider matches an email address associated with a system account) or inventory identification information. If the delivery verification/inventory identification information cannot be validated (at step 304), then in one embodiment, the system takes the appropriate action at step 306 (e.g., sends an error message, requests new delivery verification information, etc.). If at step 304, the delivery verification data is validated, then at step 308, the system is configured to add the delivery information (e.g., tracking number, etc.) to the account for the user account that matched the email address or other delivery verification information. Similarly, at step 308, the system may update the account with the relevant inventory information (e.g., number of items within the bin, etc.). Upon adding the data to the user's account, in one or more embodiments, the system then returns a "Process Complete" notification at step 310 and terminates thereafter.

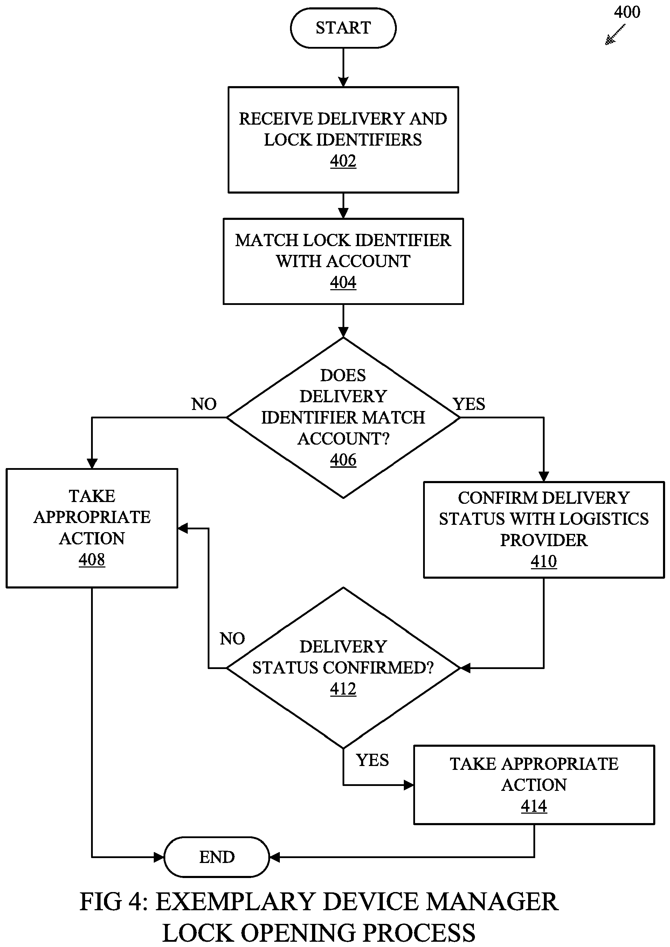

FIG. 4 illustrates an exemplary flowchart of an exemplary lock opening process 400, according to one embodiment of the present disclosure from the perspective of the device manager. Generally, the process 400 is the process by which the device manager determines whether an individual may access a secured container to secure a delivery.

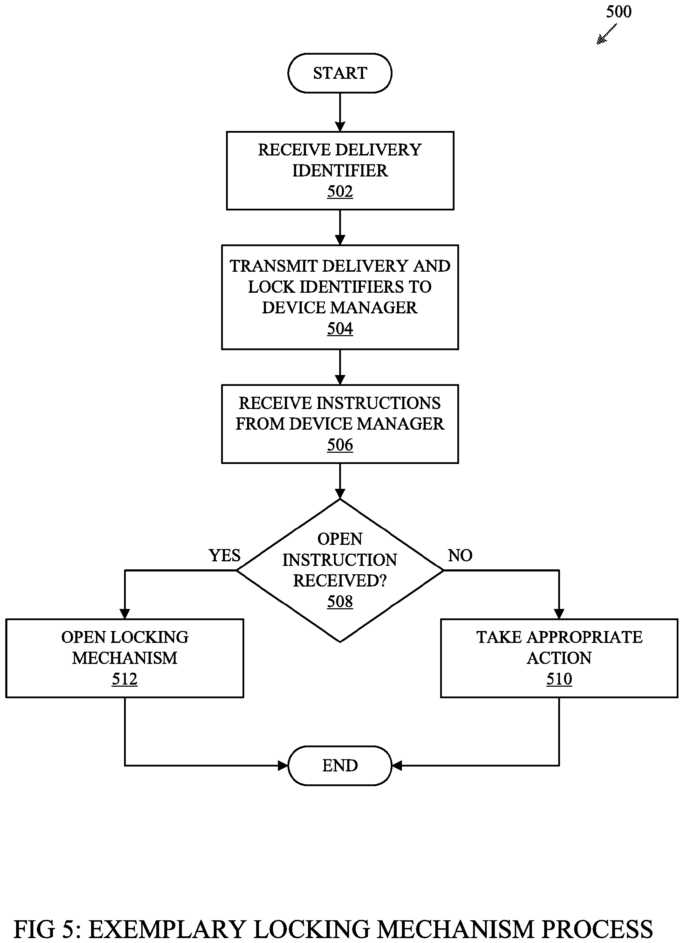

In various embodiments, the exemplary process 400 begins at step 402, in which the system is configured to receive a delivery identifier (e.g., tracking information for a package, employee identifier, etc.) and a lock identifier. In particular embodiments, the system may receive the tracking information and the lock identifier from a lock mechanism 110 after scanning a package (initiated by a courier) or employee identification badge (further details of which will be discussed in association with the description of FIG. 5).

At step 404, the system is configured to match the lock identifier (received at step 402) with a user account so that the system may determine whether that particular delivery is out for delivery to that user. In particular embodiments, the user account may be located in a database. In these embodiments, the database may be relational, non-relational, or any other suitable database structure. Turning now to step 406, the system performs a check to determine whether the delivery identifier received at step 402 is located in the user account. If the tracking number is not located in the user account, in various embodiments, at step 408, the system returns a "do not open" instruction to the lock mechanism or takes other appropriate action (e.g., contacting the authorities, recording the error, requesting resubmission of the delivery identifier, etc.).

In particular embodiments, if the tracking number is located in the user account at step 406, then, at step 410, the system is configured to send the tracking number to the courier (or other entity responsible for managing the tracking number; e.g., checking a blockchain record of the delivery to confirm its status, etc.) and receive the shipping status of the package. In particular embodiments, the system may be configured to send the tracking number to the courier via any suitable wireless communication protocol (e.g., TCP, TLS, HTTP, HTTPS, UDP, FTP, etc.). Similarly, at step 410, the system may confirm that the employee is authorized to access the bin by sending the employee's identifier to the third party system.

At step 412, the system performs a check to determine whether the shipping status of the package is "Out for Delivery" or other comparable status (e.g., "Shipped," "In Transit," "Authorizied," etc.). If the shipping status is not "out for delivery" or other comparable status, then in particular embodiments, the system is configured to return to step 408 and take the appropriate action. If, in one or more embodiments, the shipping status is "Out for Delivery" or other comparable status, then at step 414, the system is configured to return an instruction to the lock mechanism to open the lock or other appropriate action. In one embodiment, the appropriate action comprises writing a confirmation to the blockchain that the delivery has been secured and/or the locking mechanism has closed. In one embodiment, the appropriate action comprises updating the inventory status to reflect the items removed by the individual/employee. After taking the appropriate action at step 414 (or 408), the exemplary process 400 ends thereafter.

In an alternative embodiment, if at step 408, the system returns a "Do Not Open" instruction, the user may be manually verified (via telephone, email, physical presence, etc.), and the system may send a one-time-use authentication code that may open the locking mechanism.

FIG. 5 illustrates an exemplary flowchart of an exemplary locking mechanism process 500, according to one embodiment of the present disclosure. Generally, the exemplary process 500 is the process by which the locking mechanism facilitates securing a delivery/inventory items.

In various embodiments, the exemplary process begins at step 502, in which the system receives the delivery identifier (e.g., tracking number of a package, employee identifier, etc.). In particular embodiments, the system may receive the tracking number from the delivery scanner of a courier. In various embodiments, the system may receive the tracking number from a delivery scanner of a courier via Bluetooth or other wireless protocol (e.g., WiFi, infrared, Zigbee, etc.). In one or more embodiments, the system may receive the tracking number via a server. In one embodiment, the system may be configured to retrieve the tracking number via a hardwired connection (e.g., USB, Ethernet, SATA, etc.). According to the invention, the locking mechanism scans a barcode on the package/identification badge to retrieve/recognize/receive the delivery identifier.

At step 504, the locking mechanism sends the tracking number received at step 502 and a lock identifier (corresponding to the locking mechanism) to the device manager. In some embodiments, the lock identifier may be a unique character string assigned to a particular locking mechanism. In particular embodiments, the locking mechanism is configured to send the tracking number and the lock identifier via any suitable wireless communication protocol (e.g., TCP, TLS, HTTP, HTTPS, UDP, FTP, etc.).

At step 506, the system (e.g., locking mechanism) is configured to receive an instruction from the device manager. At step 508, if the instruction received is a "do not open" command or other comparable instruction (e.g., "remain closed," etc.), then at step 510, the system will retain its current state and will not open the locking mechanism or take other appropriate action (e.g., sounding an alarm, taking a video/photo, etc.). If the instruction received at step 508 is an "open lock" command or other comparable instruction (e.g., "open device," "unlock," etc.), then at step 512, the system is configured to open the locking mechanism. In one embodiment, at step 512, the system is also configured to provide confirmation back to the device manager (or third party system) when the locking mechanism has been closed (e.g., indicating that the delivery has been secured). In one embodiment, at step 512, the system may further write to the blockchain to confirm the delivery has been secured. In one embodiment, at step 512, the system may further request and receive a scan of the items removed from the bin. After steps 512 and 510, the exemplary process 500 ends thereafter.

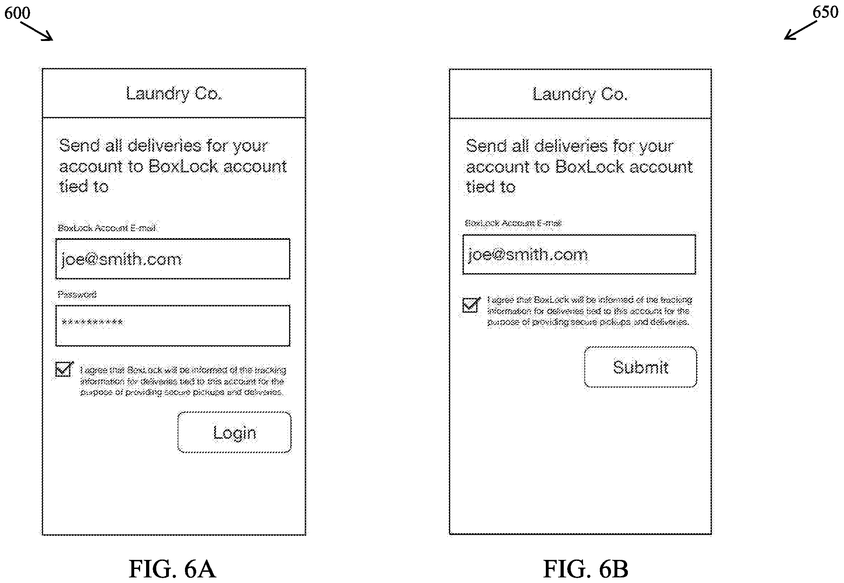

FIGS. 6-9 depict screenshots of a user interface that a user of the lock system software may use to manage a locking mechanism, according to a particular embodiment. As may be understood from these figures, a user interface for accessing the lock system software may include useful controls for managing access to the secured container, unlocking the locking mechanism, entering and recording package information, and other useful features in a streamlined manner for ease of use.

FIG. 6 (consisting of FIGS. 6A and 6B) are screenshots of exemplary methods of informing the system about user deliveries from a third party system/logistics software, according to one embodiment of the present disclosure. In particular embodiments, there are both more secure and less secure methods of informing the system about user deliveries, either from the lock system software or from the logistics (or courier) software. FIG. 6A shows a screenshot 600 of the more secure method of informing the system about user deliveries from the logistics software. In the embodiment shown in FIG. 6A, a logistics software screen 600 is shown that allows the user to provide his or her lock system software login credentials (including the user's password). Once the user provides his or her login credentials, in certain embodiments, the user's logistics software account and his or her lock system software account are generally linked. In particular embodiments, for each linked account, each time the logistics provider creates a new delivery, the logistics software sends the tracking number and lock identifier to the lock system software.

FIG. 6B shows a screenshot 650 of the less secure method of informing the system about user deliveries from the logistics software. In the embodiment shown in FIG. 6B, a logistics software screen 650 is shown that allows the user to provide his or her email address associated with the user's lock system software account. In this embodiment, access may be granted to the locking mechanism by following the process (or a substantially similar alternative) as discussed above in relation to FIG. 3.

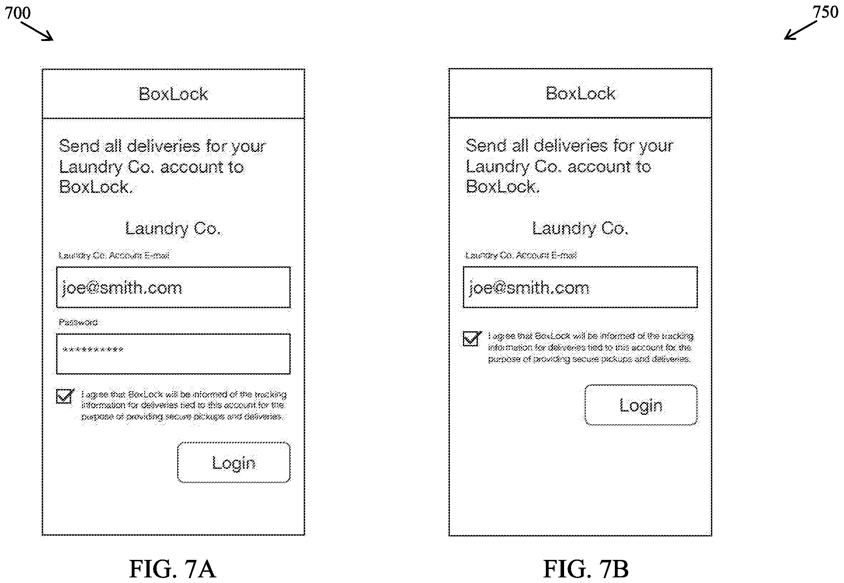

FIG. 7 (consisting of FIGS. 7A and 7B) are screenshots of exemplary methods of informing the system about user deliveries from the lock system software. As discussed above, there are both more secure and less secure methods of informing the system about user deliveries, and FIG. 7A shows a screenshot 700 of the more secure method. In the embodiment shown in FIG. 7A, a lock system software screen 700 is shown that allows the user to provide his or her logistics software login credentials (including the user's password). Once the user provides his or her login credentials, in certain embodiments, the user's logistics software account and his or her lock system software account are generally linked. In particular embodiments, for each linked account, each time the logistics provider creates a new delivery, the logistics software sends the tracking number and lock identifier to the lock system software.

FIG. 7B shows a screenshot 750 of the less secure method of informing the system about user deliveries from the lock system/device manager software. In the embodiment shown in FIG. 7B, a lock system software screen 750 is shown that allows the user to provide his or her email address associated with the user's logistics software account. In this embodiment, access may be granted to the locking mechanism by following the process (or a substantially similar alternative) as discussed above in relation to FIG. 3.

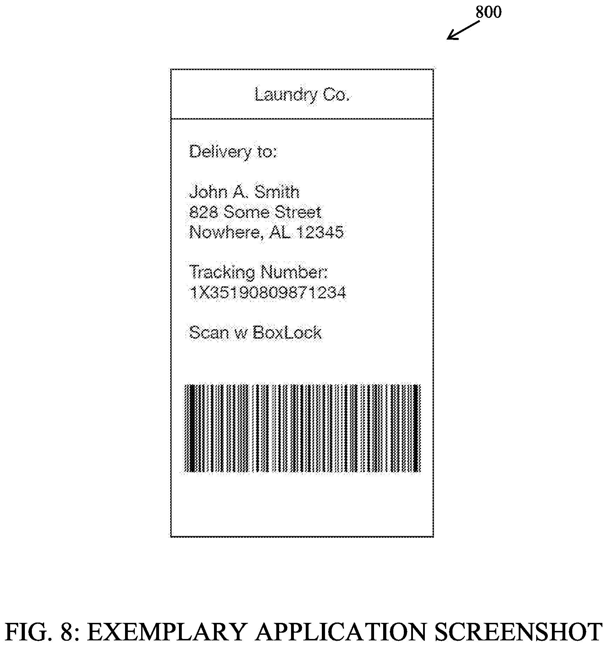

FIG. 8 shows a screenshot 800 of an exemplary barcode screen of the logistics software, according to one embodiment of the present disclosure. According to the invention, a courier scans the barcode with the locking mechanism (e.g., from a handheld device such as the delivery scanner, such that the locking mechanism receives the tracking number and send it to the lock system software as discussed above in relation to FIG. 5.

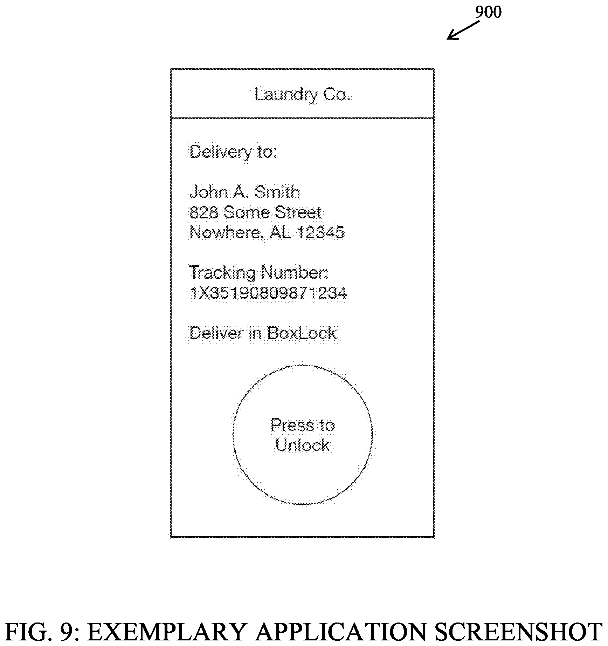

FIG. 9 shows a screenshot 900 of an exemplary screen of the logistics software (as shown on a handheld device, such as the delivery scanner) providing a button for a courier to open the locking mechanism. In various embodiments not forming part of the invention, upon a courier pressing the "Press to Unlock" button as shown, the delivery scanner may wirelessly pass the tracking number of the package to the locking mechanism, such that the locking mechanism may send it to the lock system software to obtain an instruction to open the lock as discussed above in relation to FIG. 5.

Alternatively, in various embodiments not forming part of the invention, upon the lock mechanism's receipt of an instruction to open the lock from the lock system software, the logistics software may include a "Press to Unlock" (or other comparable) button as shown in FIG. 9, that allows the courier to open the lock from his or her delivery scanner.

## Claims

1. A system (200) for securing a delivery, the system comprising:
a secured container (108) comprising a locking mechanism (110), the locking mechanism (110) comprising a barcode scanner (114);
a database configured to store a first locking mechanism identifier uniquely identifying the locking mechanism (110); and
a processor operatively connected to the database, wherein the processor is operatively configured to:
receive a first delivery identifier from a third party system (126) associated with a courier of a delivery and store the first delivery identifier in the database in association with the first locking mechanism identifier;
receive, from the locking mechanism (110), a second locking mechanism identifier and a second delivery identifier corresponding to the delivery that uniquely identifies the delivery, the second delivery identifier being derived by the barcode scanner (114) from a scan of a barcode on the delivery;
validate that the delivery should be secured in the secured container (108) by comparing the second delivery identifier and the second locking mechanism identifier from the locking mechanism (110) to the first delivery identifier and the first locking mechanism identifier stored in the database; and
upon validation that the delivery should be secured in the secured container (108), transmit, to the locking mechanism (110), instructions to open so that the delivery may be secured in the secured container.

2. The system of claim 1, wherein the processor is operatively configured to determine the delivery status of the delivery from the third party system (126).

3. The system of claim 1 or 2, wherein the delivery comprises one or more items purchased from an online retailer.

4. The system of any of claims 1 to 3, wherein the delivery comprises food, laundry, or alcohol.

5. The system of any of claims 1 to 4, wherein the locking mechanism (110) further comprises a power source, a network connection (116), and a shackle.

6. A method for securing a delivery, the method comprising the steps of:
storing, in a database, a first locking mechanism identifier that uniquely identifies a locking mechanism;
receiving (302) a first delivery identifier from a third party system associated with a courier of a delivery and storing the first delivery identifier in the database in association with the first locking mechanism identifier;
receiving (402), from the locking mechanism, a second locking mechanism identifier and a second delivery identifier corresponding to the delivery that uniquely identifies the delivery, the second delivery identifier being derived by a barcode scanner of the locking mechanism from a scan of a barcode on the delivery;
validating (406) that the delivery should be secured in a secured container by comparing the second delivery identifier and the second locking mechanism identifier received from the locking mechanism to the first delivery identifier and the first locking mechanism identifier stored in the database; and
upon validation that the delivery should be secured in the secured container, transmitting (414), to the locking mechanism, instructions to open so that the delivery may be secured in the secured container.

7. The method of claim 6, wherein the step of validating that the delivery should be secured in the secured container further comprises determining (412) the delivery status of the delivery from the third party system.

8. The method of claim 6 or 7, wherein the delivery comprises one or more items purchased from an online retailer.

9. The method of any of claims 6 or 8, wherein the delivery comprises food, laundry, or alcohol.

10. The method of any of claims 6 or 9, wherein the locking mechanism further comprises a power source, a network connection, and a shackle.

## Patentansprüche

1. System (200) zur Sicherung einer Lieferung, wobei das System Folgendes aufweist:
einen gesicherten Behälter (108), der einen Verriegelungsmechanismus (110) aufweist, wobei der Verriegelungsmechanismus (110) einen Strichcode-Leser (114) aufweist;
eine Datenbank, die zum Speichern einer ersten Verriegelungsmechanismuskennung konfiguriert ist, die den Verriegelungsmechanismus (110) eindeutig kennzeichnet; und
einen Prozessor, der funktionell mit der Datenbank verbunden ist, wobei der Prozessor funktionell konfiguriert ist zum:
Empfangen einer ersten Lieferungskennung von einem Drittsystem (126), das einem Kurier einer Lieferung zugeordnet ist, und Speichern der ersten Lieferung in Zuordnung zu der ersten Verriegelungsmechanismuskennung in der Datenbank;
Empfangen, von dem Sicherungsmechanismus (110), einer zweiten Verriegelungsmechanismuskennung und einer der Lieferung entsprechenden zweiten Lieferungskennung, die die Lieferung eindeutig kennzeichnet, wobei die zweite Lieferungskennung durch den Strichcode-Leser (114) von einer Abtastung eines Strichcodes auf der Lieferung abgeleitet wird;
Bestätigen, dass die Lieferung in dem gesicherten Behälter (108) zu sichern ist, durch Vergleichen der zweiten Lieferungskennung und der zweiten Verriegelungsmechanismuskennung von dem Verriegelungsmechanismus (110) mit der ersten Lieferungskennung und der in der Datenbank gespeicherten ersten Sicherungsmechanismuskennung; und
bei Bestätigung, dass die Lieferung in dem gesicherten Behälter (108) zu sichern ist, Übertragen von Anweisungen zum Öffnen an den Verriegelungsmechanismus (110), so dass die Lieferung in dem gesicherten Behälter gesichert werden kann.

2. System nach Anspruch 1, wobei der Prozessor funktionell zum Bestimmen des Lieferstatus der Lieferung von dem Drittsystem (126) konfiguriert ist.

3. System nach Anspruch 1 oder 2, wobei die Lieferung einen oder mehr Artikel aufweist, die bei einem Online-Händler gekauft wurden.

4. System nach einem der Ansprüche 1 bis 3, wobei die Lieferung Lebensmittel, Wäsche oder Alkohol aufweist.

5. System nach einem der Ansprüche 1 bis 4, wobei der Verriegelungsmechanismus (110) ferner eine Stromquelle, eine Netzwerkverbindung (116) und einen Bügel aufweist.

6. Verfahren zum Sichern einer Lieferung, wobei das Verfahren die folgenden Schritte aufweist:
Speichern einer ersten Verriegelungsmechanismuskennung, die einen Verriegelungsmechanismus eindeutig kennzeichnet, in einer Datenbank;
Empfangen (302) einer ersten Lieferungskennung von einem Drittsystem, das einem Kurier einer Lieferung zugeordnet ist, und Speichern der ersten Lieferungskennung in Zuordnung zu der ersten Verriegelungsmechanismuskennung in der Datenbank;
Empfangen (402), von dem Sicherungsmechanismus, einer zweiten Verriegelungsmechanismuskennung und einer der Lieferung entsprechenden zweiten Lieferungskennung, die die Lieferung eindeutig kennzeichnet, wobei die zweite Lieferungskennung durch einen Strichcode-Leser des Verriegelungsmechanismus von einer Abtastung eines Strichcodes auf der Lieferung abgeleitet wird;
Bestätigen (406), dass die Lieferung in einem gesicherten Behälter zu sichern ist, durch Vergleichen der zweiten Lieferungskennung und der von dem Verriegelungsmechanismus empfangenen zweiten Verriegelungsmechanismuskennung mit der ersten Lieferungskennung und der in der Datenbank gespeicherten ersten Sicherungsmechanismuskennung; und
bei Bestätigung, dass die Lieferung in dem gesicherten Behälter zu sichern ist, Übertragen (414) von Anweisungen zum Öffnen an den Verriegelungsmechanismus, so dass die Lieferung in dem gesicherten Behälter gesichert werden kann.

7. Verfahren nach Anspruch 6, wobei der Schritt des Bestätigens, dass die Lieferung in dem sicheren Behälter zu sichern ist, ferner das Bestimmen (412) des Lieferstatus der Lieferung von dem Drittsystem aufweist.

8. Verfahren nach Anspruch 6 oder 7, wobei die Lieferung einen oder mehr Artikel aufweist, die bei einem Online-Händler gekauft wurden.

9. Verfahren nach einem der Ansprüche 6 oder 8, wobei die Lieferung Lebensmittel, Wäsche oder Alkohol aufweist.

10. Verfahren nach einem der Ansprüche 6 oder 9, wobei der Verriegelungsmechanismus ferner eine Stromquelle, eine Netzwerkverbindung (116) und einen Bügel aufweist.

## Revendications

1. Système (200) destiné à sécuriser une livraison, le système comprenant :
un réceptacle sécurisé (108) comprenant un mécanisme de verrouillage (110), le mécanisme de verrouillage (110) comprenant un scanneur de code-barres (114) ;
une base de données configurée pour stocker un premier identifiant de mécanisme de verrouillage identifiant uniquement le mécanisme de verrouillage (110) ; et
un processeur connecté de manière opérationnelle à la base de données, dans lequel le processeur est configuré de manière opérationnelle pour :
recevoir un premier identifiant de livraison d'un système tiers (126) associé à un livreur d'une livraison et stocker le premier identifiant de livraison dans la base de données en association avec le premier identifiant de mécanisme de verrouillage ;
recevoir, du mécanisme de verrouillage (110), un deuxième identifiant de mécanisme de verrouillage et un deuxième identifiant de livraison correspondant à la livraison qui identifie uniquement la livraison, le deuxième identifiant de livraison étant obtenu par le scanneur de code-barres (114) d'un scan d'un code-barres sur la livraison ;
valider que la livraison devrait être sécurisée dans le réceptacle sécurisé (108) en comparant le deuxième identifiant de livraison et le deuxième identifiant de mécanisme de verrouillage du mécanisme de verrouillage (110) au premier identifiant de livraison et au premier identifiant de mécanisme de verrouillage stockés dans la base de données ; et
lors de la validation que la livraison devrait être sécurisée dans le réceptacle sécurisé (108), transmettre, au mécanisme de verrouillage (110), des instructions d'ouvrir de sorte que la livraison peut être sécurisée dans le réceptacle sécurisé.

2. Système selon la revendication 1, dans lequel le processeur est configuré de manière opérationnelle pour déterminer le statut de livraison de la livraison du système tiers (126).

3. Système selon la revendication 1 ou 2, dans lequel la livraison comprend un ou plusieurs articles achetés à un détaillant en ligne.

4. Système selon l'une quelconque des revendications 1 à 3, dans lequel la livraison comprend des produits alimentaires, de la blanchisserie ou de l'alcool.

5. Système selon l'une quelconque des revendications 1 à 4, dans lequel le mécanisme de verrouillage (110) comprend en outre une source de puissance, une connexion réseau (116) et une manille.

6. Procédé de sécurisation d'une livraison, le procédé comprenant les étapes consistant à :
stocker, dans une base de données, un premier identifiant de mécanisme de verrouillage qui identifie uniquement le mécanisme de verrouillage ;
recevoir (302) un premier identifiant de livraison d'un système tiers associé à un livreur d'une livraison et stocker le premier identifiant de livraison dans la base de données en association avec le premier identifiant de mécanisme de verrouillage ;
recevoir (402), du mécanisme de verrouillage, un deuxième identifiant de mécanisme de verrouillage et un deuxième identifiant de livraison correspondant à la livraison qui identifie uniquement la livraison, le deuxième identifiant de livraison étant obtenu par un scanneur de code-barres du mécanisme de verrouillage d'un scan d'un code-barres sur la livraison ;
valider (406) que la livraison devrait être sécurisée dans un réceptacle sécurisé en comparant le deuxième identifiant de livraison et le deuxième identifiant de mécanisme de verrouillage reçus du mécanisme de verrouillage au premier identifiant de livraison et au premier identifiant de mécanisme de verrouillage stockés dans la base de données ; et
lors de la validation que la livraison devrait être sécurisée dans le réceptacle sécurisé, transmettre (414), au mécanisme de verrouillage, des instructions d'ouvrir de sorte que la livraison peut être sécurisée dans le réceptacle sécurisé.

7. Procédé selon la revendication 6, dans lequel l'étape de validation que la livraison devrait être sécurisée dans le réceptacle sécurisé comprend en outre déterminer (412) le statut de livraison de la livraison du système tiers.

8. Procédé selon la revendication 6 ou 7, dans lequel la livraison comprend un ou plusieurs articles achetés à un détaillant en ligne.

9. Procédé selon l'une quelconque des revendications 6 ou 8, dans lequel la livraison comprend des produits alimentaires, de la blanchisserie ou de l'alcool.

10. Procédé selon l'une quelconque des revendications 6 ou 9, dans lequel le mécanisme de verrouillage comprend en outre une source de puissance, une connexion réseau et une manille.
